# EUROPÄISCHE PATENTSCHRIFT

(11) **EP 3 953 085 B1**
(45) Veröffentlichungstag und Bekanntmachung des Hinweises auf die Patenterteilung: **15.03.2023**
(21) Anmeldenummer: 20722472.6
(22) Anmeldetag: 08.04.2020
(51) Int. Cl.: B23B 29/03

(54) **WERKZEUG ZUR SPANENDEN BEARBEITUNG EINES WERKSTÜCKS**
TOOL FOR MACHINING A WORKPIECE
OUTIL D'USINAGE D'UNE PIÈCE PAR ENLÈVEMENT DES COPEAUX

(30) Priorität: 12.04.2019 DE 102019205364
(43) Veröffentlichungstag der Anmeldung: 16.02.2022
(73) Patentinhaber: MAPAL Fabrik für Präzisionswerkzeuge Dr. Kress KG, 73431 Aalen (DE)
(72) Erfinder: KRESS, Jochen, 73430 Aalen (DE)
(74) Vertreter: Kordel, Mattias
(86) Internationale Anmeldenummer: PCT/EP2020/060007
(87) Internationale Veröffentlichungsnummer: WO 2020/208069

(56) Entgegenhaltungen:
- DE-A1-102010 051 338
- DE-B- 1 117 972
- GB-A- 767 512
- JP-U- H0 731 204

## Beschreibung

Die Erfindung betrifft ein Werkzeug zur spanenden Bearbeitung eines Werkstücks gemäß dem Oberbegriff des unabhängigen Anspruchs 1. Ein derartiges Werkzeug ist aus dem Dokument DE 10 2010 051 338 A1 bekannt.

Ein solches Werkzeug weist eine Längsachse auf, sowie einen ersten Bearbeitungsbereich und einen entlang der Längsachse von dem ersten Bearbeitungsbereich beabstandeten zweiten Bearbeitungsbereich. Zur Bearbeitung eines Werkstücks werden das auch als Kombinationswerkzeug bezeichnete Werkzeug und das Werkstück relativ zueinander um die Längsachse gedreht, vorzugsweise wird das Werkzeug in eine Rotationsbewegung um die Längsachse versetzt, und die Bearbeitungsbereiche tragen gleichzeitig oder simultan Späne an verschiedenen, voneinander beabstandeten Stellen von dem Werkstück ab. Beispielsweise wird ein solches Werkzeug verwendet, um bei einem Statorgehäuse für einen Elektromotor zugleich eine Aufnahmebohrung für einen Stator und eine Lagerbohrung zur Lagerung eines Rotors zu bearbeiten. Bei solchen Anwendungen wird ein sehr hohes Maß an Koaxialität zwischen den verschiedenen Bohrungen angestrebt, insbesondere weil dies im Beispiel des Statorgehäuses eine Konstanz eines Luftspalts zwischen Stator und Rotor definiert und sich somit direkt auf die Leistung und/oder den Wirkungsgrad des Elektromotors auswirkt. Als problematisch erweist sich dabei, wenn in einem der Bearbeitungsbereiche abgetragene Späne in den anderen Bearbeitungsbereich gelangen können und somit dort die Qualität der bearbeiteten Werkstückoberfläche herabsetzen - entweder direkt durch unmittelbares Einwirken auf die Werkstückoberfläche, oder durch Beschädigen von Schneiden und/oder Führungsleisten des Werkzeugs. Besonders problematisch ist dies dann, wenn das Werkstück an der einen bearbeiteten Stelle ein härteres Material aufweist als an der anderen bearbeiteten Stelle, wobei die Späne des härteren Materials die Oberflächenqualität am Ort des weicheren Materials negativ beeinflussen können.

Der Erfindung liegt die Aufgabe zugrunde, ein Werkzeug zu schaffen, bei dem die genannten Nachteile nicht auftreten.

Die Aufgabe wird durch ein Werkzeug gemäß Anspruch 1 gelöst, indem ein Werkzeug, insbesondere Kombinationswerkzeug, der zuvor angesprochenen Art derart weitergebildet wird, dass zwischen dem ersten Bearbeitungsbereich und dem zweiten Bearbeitungsbereich eine Spanschutzbarriere angeordnet ist. Die Spanschutzbarriere ist eingerichtet, um ein Eindringen von Spänen, die in einem Bearbeitungsbereich beim Bearbeiten eines Werkstücks von dem Werkstück abgetragen werden, in den anderen Bearbeitungsbereich zu verhindern. Auf diese Weise wird eine Beeinträchtigung der Oberflächenqualität des Werkstück an einer von einem der Bearbeitungsbereiche bearbeiteten Stelle durch Späne von einer anderen Stelle, die durch den anderen Bearbeitungsbereich bearbeitet wird, wirksam verhindert. Insbesondere kann so eine sehr hohe Koaxialität zweier durch die verschiedenen Bearbeitungsbereiche simultan bearbeiteten Bohrungen gewährleistet werden. Insbesondere kann verhindert werden, dass Späne eines harten Materials die Oberfläche eines weicheren Materials an anderer Stelle beeinträchtigen.

Die Längsachse des Werkzeugs ist insbesondere diejenige Achse, um welche die Relativdrehung des Werkzeugs zu dem Werkstück bewirkt wird. Vorzugsweise ist die Längsachse eine Symmetrieachse des Werkzeugs. Vorzugsweise ist die Längsachse eine Achse längster Erstreckung des Werkzeugs. Vorzugsweise wird ein Vorschub des Werkzeugs relativ zu dem Werkstück während der spanenden Bearbeitung desselben entlang der Längsachse bewirkt. Eine Axialrichtung erstreckt sich entlang der Längsachse. Eine radiale Richtung steht senkrecht auf der Längsachse. Eine Umfangsrichtung umgreift die Längsachse konzentrisch.

Unter einem Bearbeitungsbereich wird insbesondere ein Bereich des Werkzeugs verstanden, in dem dieses lokal eingerichtet ist, um Späne von einem Werkstück abzutragen, insbesondere indem in dem Bearbeitungsbereich eine Schneide, insbesondere eine geometrisch definierte Schneide, angeordnet ist.

Die Spanschutzbarriere ist insbesondere eingerichtet um zu verhindern, dass Späne aus dem ersten Bearbeitungsbereich in den zweiten Bearbeitungsbereich gelangen.

Gemäß einer Weiterbildung der Erfindung ist vorgesehen, dass der erste Bearbeitungsbereich eingerichtet ist zur Bearbeitung eines ersten, härteren Materials, wobei der zweite Bearbeitungsbereich eingerichtet ist zur Bearbeitung eines zweiten, weicheren - das heißt weniger harten - Materials. Insbesondere in diesem Fall verwirklichen sich in besonderer Weise die bereits zuvor erläuterten Vorteile. Insbesondere verhindert die Spanschutzbarriere effektiv, dass Späne des ersten, härteren Materials in den Bereich des zweiten, weicheren Materials eindringen und dort die Oberflächenqualität des bearbeiteten Werkstücks herabsetzen. Das erste, härtere Material ist insbesondere härter als das zweite, weichere Material. Umgekehrt ist das zweite, weichere Material insbesondere weniger hart, weist also eine geringere Härte auf, als das erste, härtere Material.

Der erste Bearbeitungsbereich ist bevorzugt eingerichtet zur Bearbeitung des ersten, härteren Materials im Vergleich zu dem zweiten Bearbeitungsbereich, indem der erste Bearbeitungsbereich einen anderen Schneidstoff aufweist als der zweite Bearbeitungsbereich. Insbesondere ist eine Schneide des ersten Bearbeitungsbereichs bevorzugt aus oder in einem anderen Schneidstoff, das heißt Material im Bereich der Schneide, gebildet als eine Schneide des zweiten Bearbeitungsbereichs, wodurch die verschiedenen Bearbeitungsbereiche zur Bearbeitung verschieden harter Materialien eingerichtet sind.

Der erste Bearbeitungsbereich ist vorzugsweise eingerichtet zur Bearbeitung von Stahl. Alternativ oder zusätzlich ist der zweite Bearbeitungsbereich bevorzugt eingerichtet zur Bearbeitung von Aluminium. Insbesondere weisen die Bearbeitungsbereiche bevorzugt zur Bearbeitung der entsprechenden Materialien geeignete Schneidstoffe auf.

Gemäß einer Weiterbildung der Erfindung ist vorgesehen, dass die Spanschutzbarriere als Spanschutzblech ausgebildet ist. Dies stellt eine besonders einfache, einfach zu fertigende und kostengünstige Ausgestaltung der Spanschutzbarriere dar. Das Spanschutzblech ist zwischen den Bearbeitungsbereichen bevorzugt in Umfangsrichtung umlaufend geschlossen ausgebildet. Auf diese Weise wird ein Eindringen von Spänen aus dem einen Bearbeitungsbereich in den anderen Bearbeitungsbereich besonders sicher vermieden. Bevorzugt erstreckt sich das Spanschutzblech in radialer Richtung bis zu einem größeren Radius, ausgewählt aus den Radien des ersten Bearbeitungsbereichs und des zweiten Bearbeitungsbereichs. Bevorzugt erstreckt sich das Spanschutzblech in radialer Richtung bis zu dem Radius des zweiten Bearbeitungsbereichs.

Unter einem Radius eines Bearbeitungsbereichs wird hier insbesondere der Radius des Flugkreises einer Schneide des Bearbeitungsbereichs, das heißt ein größter, einen Bearbeitungs-Durchmesser definierender Radius des jeweiligen Bearbeitungsbereichs, verstanden.

Unter einem Spanschutzblech wird insbesondere eine flächige und/oder dünne Ausgestaltung der Spanschutzbarriere verstanden. Unter "dünn" wird dabei insbesondere verstanden, dass das Material der Spanschutzbarriere in einer ersten - insbesondere kartesischen - Richtung eine Erstreckung oder "Dicke" aufweist, die sehr viel kleiner ist als die Erstreckung des Materials der Spanschutzbarriere in den beiden anderen - insbesondere kartesischen - Richtungen.

Das Spanschutzblech weist vorzugsweise ein metallisches Material auf oder besteht aus einem solchen Material. Es ist alternativ auch möglich, dass das Spanschutzblech ein Organoblech aufweist oder aus einem Organoblech gebildet ist.

Gemäß einer Weiterbildung der Erfindung ist vorgesehen, dass die Spanschutzbarriere als Spanschutzhohlkegel ausgebildet ist, der sich zu dem ersten Bearbeitungsbereich hin öffnet. Auf diese Weise kann die Spanschutzbarriere besonders effizient den zweiten Bearbeitungsbereich von den im ersten Bearbeitungsbereich abgetragenen Spänen abschirmen. Insbesondere ist die Spanschutzbarriere bevorzugt als kegelförmiges Spanschutzblech ausgebildet.

Der Spanschutzhohlkegel weist bevorzugt an seinem Fußende einen in Umfangsrichtung umlaufenden Rand auf. Der Rand ist bevorzugt elastisch ausgebildet und auf diese Weise geeignet, um Toleranzen zu einer Bohrungsinnenfläche des bearbeiteten Werkstücks auszugleichen. In besonders bevorzugter Ausgestaltung weist der Rand eine elastische Dichtlippe auf oder ist als elastische Dichtlippe ausgebildet.

Gemäß einer Weiterbildung der Erfindung ist vorgesehen, dass der erste Bearbeitungsbereich einen ersten Bearbeitungs-Durchmesser aufweist, wobei der zweite Bearbeitungsbereich einen zweiten Bearbeitungs-Durchmesser aufweist, und wobei der erste Bearbeitungs-Durchmesser kleiner ist als der zweite Bearbeitungs-Durchmesser. Auf diese Weise können durch die verschiedenen Bearbeitungsbereiche vorteilhaft verschieden große Bohrungen, beispielsweise eine Aufnahmebohrung für einen Stator - insbesondere durch den zweiten Bearbeitungsbereich - einerseits und eine Lagerbohrung für einen Rotor - insbesondere durch den ersten Bearbeitungsbereich - andererseits bearbeitet werden.

Der Bearbeitungs-Durchmesser eines Bearbeitungsbereichs wird bevorzugt definiert durch den Durchmesser eines Flugkreises einer Schneide des Bearbeitungsbereichs.

Der zweite Bearbeitungs-Durchmesser des zweiten Bearbeitungsbereichs beträgt bevorzugt von mindestens 200 mm bis höchstens 350 mm, vorzugsweise von mindestens 250 mm bis höchstens 300 mm. Mit diesen Durchmesserbereichen ist das Werkzeug in besonderer Weise geeignet zur Bearbeitung eines Statorgehäuses für einen Elektromotor, insbesondere für die Anwendung im Automobilbereich, insbesondere für einen elektrischen Antriebsmotor eines Kraftfahrzeugs, insbesondere eines elektrisch oder hybrid angetriebenen Personenkraftwagens.

Gemäß einer Weiterbildung der Erfindung ist vorgesehen, dass der erste Bearbeitungsbereich und der zweite Bearbeitungsbereich jeweils wenigstens eine geometrisch definierte Schneide aufweisen. Unter einer geometrisch definierten Schneide wird insbesondere eine Schneidkante verstanden, die in für sich genommen bekannter Weise gebildet ist als Schnittlinie einer Spanfläche mit einer Freifläche. Es ist möglich, dass die Freifläche unmittelbar an die Schneidkante anschließend eine Rundschlifffase als ersten Freiflächenbereich aufweist, an den sich wiederum ein entgegen der Bearbeitungsrichtung abfallender Flächenbereich als zweiter Freiflächenbereich anschließt. Das Werkzeug ist insbesondere sowohl in dem ersten Bearbeitungsbereich als auch in dem zweiten Bearbeitungsbereich eingerichtet zum Zerspanen mit geometrisch definierter Schneide.

Bevorzugt ist die wenigstens eine geometrisch definierte Schneide an einer Messerplatte ausgebildet, die an einem Grundkörper des Werkzeugs in dem ersten Bearbeitungsbereich oder in dem zweiten Bearbeitungsbereich befestigt ist. Vorzugsweise weisen sowohl der erste Bearbeitungsbereich als auch der zweite Bearbeitungsbereich eine Mehrzahl solcher Messerplatten auf.

Gemäß einer Weiterbildung der Erfindung ist vorgesehen, dass die wenigstens eine geometrisch definierte Schneide des ersten Bearbeitungsbereichs in Cermet oder Hartmetall, insbesondere als Schneidstoff, gebildet ist, wobei die wenigstens eine geometrisch definierte Schneide des zweiten Bearbeitungsbereichs in polykristallinem Diamant - im Folgenden PKD -, insbesondere als Schneidstoff, gebildet ist. Dass die geometrisch definierte Schneide in einem Material oder Schneidstoff gebildet ist, bedeutet insbesondere, dass sie aus einem dieses Material aufweisenden oder aus diesem Material bestehenden Körper herausgearbeitet, insbesondere durch Schleifen an dem Körper hergestellt ist. Cermet und Hartmetall eignen sich in besondere Weise zum Zerspanen härterer Materialien, insbesondere Stahl, wobei sich PKD in besondere Weise zum Zerspanen weniger harter Materialien, insbesondere Aluminium, eignet.

Gemäß einer Weiterbildung der Erfindung ist vorgesehen, dass der erste Bearbeitungsbereich in Vorschubrichtung des Werkzeugs gesehen dem zweiten Bearbeitungsbereich voreilt. Auf diese Weise kann mit dem ersten Bearbeitungsbereich eine erste Bohrung bearbeitet werden, die einer zweiten Bohrung in Vorschubrichtung vorausliegt, wobei die zweite Bohrung simultan durch den zweiten Bearbeitungsbereich bearbeitet wird. Insbesondere kann mit dem ersten Bearbeitungsbereich eine Lagerbohrung für einen Rotor an einem Statorgehäuse bearbeitet werden, wobei gleichzeitig mit dem zweiten Bearbeitungsbereich eine Aufnahmebohrung für einen Stator an dem Statorgehäuse bearbeitet wird.

Vorzugsweise eilt der erste Bearbeitungsbereich in Vorschubrichtung des Werkzeugs gesehen dem zweiten Bearbeitungsbereich vor, wobei zugleich der zweite Bearbeitungsbereich einen größeren Bearbeitungs-Durchmesser aufweist als der erste Bearbeitungsbereich. Dies ermöglicht es, den ersten Bearbeitungsbereich durch die zweite, größere Bohrung hindurch in den Bereich der ersten, kleineren Bohrung einzuführen und dann beide Bohrungen zugleich zu bearbeiten.

Gemäß einer Weiterbildung der Erfindung ist vorgesehen, dass das Werkzeug einen zylindrischen Grundkörper aufweist. Von dem zylindrischen Grundkörper ragt zumindest in dem zweiten Bearbeitungsbereich eine Rippe ab. Die wenigstens eine geometrisch definierte Schneide des zweiten Bearbeitungsbereichs ist an der Rippe angeordnet. Das Werkzeug kann so besonders leicht und zugleich stabil ausgebildet, insbesondere in Leichtbauweise gefertigt sein. Vorzugsweise ist an der Rippe wenigstens eine Messerplatte angeordnet, insbesondere befestigt, insbesondere eingespannt. Vorzugsweise weist der zweite Bearbeitungsbereich eine Mehrzahl von dem zylindrischen Grundkörper abragender Rippen auf, wobei an jeder Rippe wenigstens eine geometrisch definierte Schneide, insbesondere wenigstens eine Messerplatte angeordnet ist.

Es versteht sich, dass der zylindrische Grundkörper einen Durchmesser aufweist, der kleiner ist als der zweite Bearbeitungs-Durchmesser des zweiten Bearbeitungsbereichs. Die Distanz zwischen dem Durchmesser des Grundkörpers und dem zweiten Bearbeitungs-Durchmesser wird durch die wenigstens eine Rippe überbrückt.

Der Grundkörper und/oder die wenigstens eine Rippe ist/sind bevorzugt aus einem Metall oder einer Metalllegierung gefertigt. Sie können auch verschiedene Materialien aufweisen, sowohl voneinander verschiedene Materialien, als auch innerhalb eines Teils eine Mehrzahl von Materialien. Es ist auch möglich, dass zumindest ein Teil, ausgewählt aus dem Grundkörper und der Rippe, einen faserverstärkten Kunststoff aufweist oder aus faserverstärktem Kunststoff gebildet ist.

Der zylindrische Grundkörper ist bevorzugt hohl ausgebildet, insbesondere als Hohlkörper. Das Werkzeug ist auf diese Weise besonders leicht, was nicht zuletzt auch die Energiekosten für die Bearbeitung eines Werkstücks senkt.

Der erste Bearbeitungsbereich ist bevorzugt axial stirnseitig - in Vorschubrichtung vorne - an dem Grundkörper angeordnet.

Die Spanschutzbarriere ist bevorzugt axial stirnseitig - in Vorschubrichtung vorne - an dem Grundkörper angeordnet, insbesondere befestigt, insbesondere an den Grundkörper angeschraubt. Vorzugsweise umgreift die Spanschutzbarriere den ersten Bearbeitungsbereich in Umfangsrichtung. Vorzugsweise nimmt die als Spanschutzhohlkegel ausgebildete Spanschutzbarriere den ersten Bearbeitungsbereich bereichsweise - in Axialrichtung gesehen - auf.

Gemäß einer Weiterbildung der Erfindung ist vorgesehen, dass das Werkzeug eine Schnittstelle zum Einspannen des Werkzeugs in eine Maschinenspindel aufweist. Die Schnittstelle ist bevorzugt entlang der Längsrichtung dem ersten Bearbeitungsbereich gegenüberliegend - in Vorschubrichtung hinten - an dem Grundkörper angeordnet. Die Schnittstelle ist bevorzugt als kegelförmige Schnittstelle, insbesondere als Präzisionsschnittstelle, oder als zylindrische Schnittstelle ausgebildet.

Gemäß einer Weiterbildung der Erfindung ist vorgesehen, dass das Werkzeug als Feinbohrwerkzeug ausgebildet ist. Auf diese Weise ist das Werkzeug besonders geeignet zur Bearbeitung von Aufnahmebohrungen und/oder Lagerbohrungen insbesondere an Statorgehäusen oder Getriebegehäusen.

Gemäß einer Weiterbildung der Erfindung ist vorgesehen, dass das Werkzeug eingerichtet ist zum Bearbeiten eines Motorgehäuses, insbesondere eines Elektromotors, insbesondere eines Statorgehäuses mit einer Aufnahmebohrung für einen Stator und einer Lagerbohrung für einen Rotor. Dabei ist das Statorgehäuse typischerweise aus Aluminium, insbesondere Aluminium-Guss, gefertigt, wobei die Aufnahmebohrung direkt in dem Aluminiumkörper des Statorgehäuses gebildet ist, und wobei die Lagerbohrung für den Rotor in einer Stahlaufnahme oder Stahlbuchse gebildet ist, die ihrerseits in eine Buchsenaufnahme des Aluminiumkörpers eingesetzt ist. Die Lagerbohrung und die Aufnahmebohrung können nun simultan, das heißt gleichzeitig, mit dem Werkzeug bearbeitet werden, ohne dass die Gefahr besteht, dass Stahlspäne aus dem Bereich der Lagerbohrung in den Bereich der Aufnahmebohrung gelangen. Die Lagerbohrung wird dabei durch den ersten Bearbeitungsbereich des Werkzeugs bearbeitet, und die Aufnahmebohrung durch den zweiten Bearbeitungsbereich. Mit Hilfe des hier vorgeschlagenen Werkzeugs kann insbesondere eine verbesserte Koaxialität zwischen der Lagerbohrung und der Aufnahmebohrung gewährleistet werden, was sich insbesondere positiv auf die Konstanz eines Luftspalts zwischen dem Stator und dem Rotor des entstehenden Elektromotors auswirkt, und somit auch direkt auf dessen Leistung und/oder Wirkungsgrad.

Insbesondere ist das Werkzeug eingerichtet zur Bearbeitung eines Statorgehäuses für einen Elektromotor zur Anwendung im Automobilbereich, insbesondere für einen elektrischen Antriebsmotor eines Kraftfahrzeugs, insbesondere eines elektrisch oder hybrid angetriebenen Personenkraftwagens.

Alternativ oder zusätzlich ist das Werkzeug eingerichtet zur Bearbeitung eines Getriebegehäuses. Auch hier kann es erforderlich oder vorteilhaft sein, eine Mehrzahl von Bohrungen, insbesondere Lagerbohrungen, vorzugsweise mit verschiedenen Materialien und/oder verschiedenen Durchmessern, mit sehr genau definierter Koaxialiät zu bearbeiten.

Die Erfindung wird im Folgenden anhand der Zeichnung näher erläutert. Dabei zeigen:
- Figur 1: eine Darstellung eines Ausführungsbeispiels eines Werkzeugs zur spanenden Bearbeitung eines Werkstücks, und
- Figur 2: eine Darstellung eines Beispiels eines mit dem Werkzeug gemäß Figur 1 zu bearbeitenden Werkstücks.

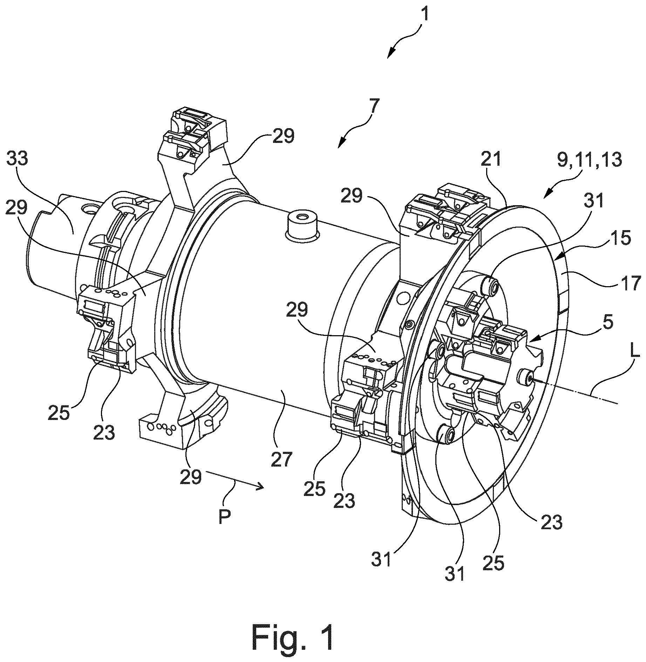

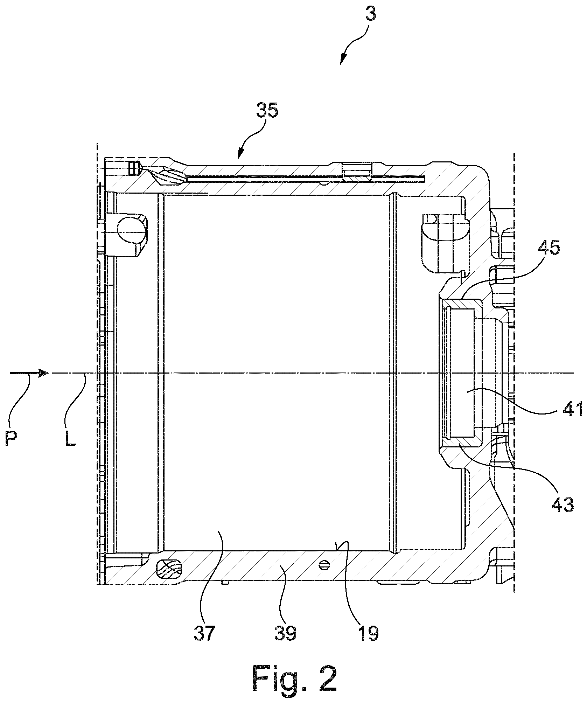

**Fig. 1** zeigt eine Darstellung eines Ausführungsbeispiels eines Werkzeugs 1 zur spanenden Bearbeitung eines in Figur 2 dargestellten Werkstücks 3. Das Werkzeug 1 weist eine Längsachse L auf, sowie einen ersten Bearbeitungsbereich 5 und einen zweiten Bearbeitungsbereich 7, wobei der erste Bearbeitungsbereich 5 entlang der Längsachse L von dem zweiten Bearbeitungsbereich 7 beabstandet ist. Zwischen dem ersten Bearbeitungsbereich 5 und dem zweiten Bearbeitungsbereich 7 ist eine Spanschutzbarriere 9 angeordnet. Diese ist ausgebildet, um in vorteilhafter Weise zu verhindern, dass von dem Werkstück 3 in einem der Bearbeitungsbereiche 5, 7 abgetragene Späne in den anderen Bearbeitungsbereich 7, 5 der Bearbeitungsbereiche 5, 7 gelangen. Insbesondere verhindert die Spanschutzbarriere 9, dass von dem ersten Bearbeitungsbereich 5 abgetragene Späne in den Bereich des zweiten Bearbeitungsbereichs 7 gelangen. Eine Beeinträchtigung einer durch den zweiten Bearbeitungsbereich 7 bearbeiteten Oberfläche des Werkstücks 3 durch Späne des ersten Bearbeitungsbereichs 5 - und umgekehrt - wird so wirksam vermieden.

Der erste Bearbeitungsbereich 5 ist bevorzugt eingerichtet zur Bearbeitung eines ersten, härteren Materials, insbesondere zur Bearbeitung von Stahl, wobei der zweite Bearbeitungsbereich 7 eingerichtet ist zur Bearbeitung eines zweiten, weicheren Materials, insbesondere zur Bearbeitung von Aluminium.

Die Spanschutzbarriere 9 ist bevorzugt als Spanschutzblech 11 ausgebildet. Das Spanschutzblech 11 ist zwischen den Bearbeitungsbereichen 5, 7 bevorzugt in Umfangsrichtung um die Längsachse L umlaufend geschlossen ausgebildet. Bevorzugt erstreckt sich das Spanschutzblech 11 in radialer Richtung bis zu einem größten Radius des zweiten Bearbeitungsbereichs 7.

Die Spanschutzbarriere 9 ist bevorzugt als Spanschutzhohlkegel 13 ausgebildet, der sich zu dem ersten Bearbeitungsbereich 5 hin öffnet. Insbesondere ist das Spanschutzblech 11 bevorzugt kegelförmig ausgebildet und bildet so den Spanschutzhohlkegel 13.

Der Spanschutzhohlkegel 13 weist bevorzugt an seinem Fußende 15 einen in Umfangsrichtung umlaufenden Rand 17 auf. Der Rand 17 ist in bevorzugter Ausgestaltung elastisch ausgebildet und auf diese Weise insbesondere geeignet, um Toleranzen zu einer in Figur 2 dargestellten Bohrungsinnenfläche 19 des bearbeiteten Werkstücks 3 auszugleichen. In besonders bevorzugter Ausgestaltung weist der Rand 17 eine elastische Dichtlippe 21 auf oder ist als elastische Dichtlippe 21 ausgebildet.

Der erste Bearbeitungsbereich 5 weist einen ersten Bearbeitungs-Durchmesser auf, wobei der zweite Bearbeitungsbereich 7 einen zweiten Bearbeitungs-Durchmesser aufweist. Der erste Bearbeitungs-Durchmesser ist hier kleiner als der zweite Bearbeitungs-Durchmesser.

Der zweite Bearbeitungs-Durchmesser beträgt bevorzugt von mindestens 200 mm bis höchstens 350 mm, vorzugsweise von mindestens 250 mm bis höchstens 300 mm.

Der erste Bearbeitungsbereich 5 und der zweite Bearbeitungsbereich 7 weisen bevorzugt jeweils wenigstens eine geometrisch definierte Schneide 23 auf, von denen der besseren Übersichtlichkeit wegen hier in dem ersten Bearbeitungsbereich 5 nur eine geometrisch definierte Schneide 23 und in dem zweiten Bearbeitungsbereich 7 nur zwei geometrisch definierte Schneiden 23 mit dem entsprechenden Bezugszeichen gekennzeichnet sind. Die geometrisch definierten Schneiden 23 sind jeweils an Messerplatten 25 ausgebildet, die in den Bearbeitungsbereichen 5, 7 angeordnet, insbesondere befestigt, vorzugsweise eingespannt sind. Auch von den Messerplatten 25 sind der besseren Übersichtlichkeit wegen in dem ersten Bearbeitungsbereich 5 nur eine und in dem zweiten Bearbeitungsbereich 7 nur zwei mit dem entsprechenden Bezugszeichen gekennzeichnet.

Die geometrisch definierten Schneiden 23 des ersten Bearbeitungsbereichs 5 sind bevorzugt in Cermet oder Hartmetall gebildet. Die geometrisch definierten Schneiden 23 des zweiten Bearbeitungsbereichs 7 sind bevorzugt in PKD gebildet.

Der erste Bearbeitungsbereich 5 eilt in Vorschubrichtung des Werkzeugs 1 gesehen bevorzugt dem zweiten Bearbeitungsbereich 7 vor. Die Vorschubrichtung ist in Figur 1 durch einen Pfeil P gekennzeichnet.

Das Werkzeug 1 weist bevorzugt einen zylindrischen Grundkörper 27 auf, von dem in dem zweiten Bearbeitungsbereich 7 eine Rippe 29, insbesondere eine Mehrzahl von Rippen 29, abragt. Die geometrisch definierten Schneiden 23, insbesondere die Messerplatten 25, des zweiten Bearbeitungsbereichs 7 sind an den Rippen 29 angeordnet.

Der zylindrische Grundkörper 27 ist bevorzugt hohl ausgebildet, insbesondere als Hohlkörper. Der erste Bearbeitungsbereich 5 ist bevorzugt axial stirnseitig - in Vorschubrichtung vorne - an dem Grundkörper 27 angeordnet.

Die Spanschutzbarriere 9 ist bevorzugt axial stirnseitig - in Vorschubrichtung vorne - an dem Grundkörper 27 angeordnet, insbesondere befestigt, insbesondere ist sie hier stirnseitig mittels axialer Schrauben 31 an den Grundkörper 27 angeschraubt. Die Spanschutzbarriere 9 umgreift hier den ersten Bearbeitungsbereich 5 in Umfangsrichtung. Dabei nimmt der Spanschutzhohlkegel 13 den ersten Bearbeitungsbereich 5 bereichsweise - in Axialrichtung gesehen - auf.

Das Werkzeug 1 weist hier entlang der Längsrichtung dem ersten Bearbeitungsbereich 5 gegenüberliegend - in Vorschubrichtung hinten - an dem Grundkörper 27 eine Schnittstelle 33 zum Einspannen des Werkzeugs 1 in eine nicht dargestellte Maschinenspindel auf. Die Schnittstelle 33 ist hier in bevorzugter Ausgestaltung als kegelförmige Schnittstelle ausgebildet, insbesondere als Präzisionsschnittstelle. Sie kann aber auch als zylindrische Schnittstelle ausgebildet sein.

Das hier dargestellte Ausführungsbeispiel des Werkzeugs 1 ist als Feinbohrwerkzeug ausgebildet.

Das Werkzeug 1 ist insbesondere eingerichtet zum Bearbeiten eines Motorgehäuses, insbesondere eines Statorgehäuses mit einer Aufnahmebohrung für einen Stator und einer Lagerbohrung für einen Rotor. Alternativ kann es eingerichtet sein zur Bearbeitung eines Getriebegehäuses.

**Fig. 2** zeigt eine Darstellung eines Beispiels eines mit dem Werkzeug 1 zu bearbeitenden Werkstücks 3. Das Werkstück 3 ist hier in bevorzugter Ausgestaltung ein Statorgehäuse 35 für einen Elektromotor, insbesondere für die Anwendung im Automobilbereich, insbesondere für einen elektrischen Antriebsmotor eines Kraftfahrzeugs, insbesondere eines elektrisch oder hybrid angetriebenen Personenkraftwagens.

In Figur 2 ist auch die Längsachse L dargestellt, um welche zur Bearbeitung des Werkstücks 3 mit dem Werkzeug 1 eine Relativdrehung zwischen dem Werkzeug 1 und dem Werkstück 3 bewirkt wird, sowie der Pfeil P, der die Vorschubrichtung des Werkzeugs 1 bei der Bearbeitung des Werkstücks 3 entlang der Längsachse L anzeigt.

Das Statorgehäuse 35 ist bevorzugt aus Aluminium, insbesondere Aluminium-Guss, gefertigt, wobei eine Aufnahmebohrung 37 für einen Stator vorzugsweise direkt in einem Aluminiumkörper 39 des Statorgehäuses 35 gebildet ist. Eine Lagerbohrung 41 für einen Rotor des Elektromotors ist in einer Stahlaufnahme oder Stahlbuchse 43 gebildet, die ihrerseits in eine Buchsenaufnahme 45 des Aluminiumkörpers 39 eingesetzt ist.

Die Lagerbohrung 41 und die Aufnahmebohrung 37 werden simultan mit dem Werkzeug 1 bearbeitet. Aufgrund der Spanschutzbarriere 9 besteht dabei nicht die Gefahr, dass Stahlspäne aus dem Bereich der Lagerbohrung 41 in den Bereich der Aufnahmebohrung 37 gelangen.

Die Lagerbohrung 41 wird durch den ersten Bearbeitungsbereich 5 des Werkzeugs 1 bearbeitet. Die Aufnahmebohrung 37 wird gleichzeitig durch den zweiten Bearbeitungsbereich 7 bearbeitet.

Mit Hilfe des hier vorgeschlagenen Werkzeugs 1 kann insbesondere eine verbesserte Koaxialität zwischen der Lagerbohrung 41 und der Aufnahmebohrung 37 gewährleistet werden, was sich insbesondere positiv auf die Konstanz eines Luftspalts zwischen dem Stator und dem Rotor des entstehenden Elektromotors auswirkt, und somit auch direkt auf dessen Leistung und/oder Wirkungsgrad.

## Patentansprüche

1. Werkzeug (1) zur spanenden Bearbeitung eines Werkstücks (3), mit
- einer Längsachse (L), wobei
- das Werkzeug (1) einen ersten Bearbeitungsbereich (5) und einen zweiten Bearbeitungsbereich (7) aufweist, wobei
- der erste Bearbeitungsbereich (5) entlang der Längsachse (L) von dem zweiten Bearbeitungsbereich (7) beabstandet ist,
**dadurch gekennzeichnet, dass**
- zwischen dem ersten Bearbeitungsbereich (5) und dem zweiten Bearbeitungsbereich (7) eine Spanschutzbarriere (9) angeordnet ist, die eingerichtet ist um zu verhindern, dass von einem Werkstück (3) abgetragene Späne von einem Bearbeitungsbereich (5,7), ausgewählt aus dem ersten Bearbeitungsbereich (5) und dem zweiten Bearbeitungsbereich (7), in den anderen Bearbeitungsbereich (7,5), ausgewählt aus dem zweiten Bearbeitungsbereich (7) und dem ersten Bearbeitungsbereich (5), gelangen.

2. Werkzeug (1) nach Anspruch 1, **dadurch gekennzeichnet, dass** der erste Bearbeitungsbereich (5) eingerichtet ist zur Bearbeitung eines ersten, härteren Materials, wobei der zweite Bearbeitungsbereich (7) eingerichtet ist zur Bearbeitung eines zweiten, weicheren Materials.

3. Werkzeug (1) nach einem der vorhergehenden Ansprüche, **dadurch gekennzeichnet, dass** die Spanschutzbarriere (9) als Spanschutzblech (11) ausgebildet ist.

4. Werkzeug (1) nach einem der vorhergehenden Ansprüche, **dadurch gekennzeichnet, dass** die Spanschutzbarriere (9) als Spanschutzhohlkegel (13) ausgebildet ist, der sich zu dem ersten Bearbeitungsbereich (5) hin öffnet.

5. Werkzeug (1) nach einem der vorhergehenden Ansprüche, **dadurch gekennzeichnet, dass** der erste Bearbeitungsbereich (5) einen ersten Bearbeitungs-Durchmesser aufweist, wobei der zweite Bearbeitungsbereich (7) einen zweiten Bearbeitungs-Durchmesser aufweist, und wobei der erste Bearbeitungs-Durchmesser kleiner ist als der zweite Bearbeitungs-Durchmesser.

6. Werkzeug (1) nach einem der vorhergehenden Ansprüche, **dadurch gekennzeichnet, dass** der erste Bearbeitungsbereich (5) und der zweite Bearbeitungsbereich (7) jeweils wenigstens eine geometrisch definierte Schneide (23) aufweisen.

7. Werkzeug (1) nach einem der vorhergehenden Ansprüche, **dadurch gekennzeichnet, dass** die wenigstens eine geometrisch definierte Schneide (23) des ersten Bearbeitungsbereichs (5) in Cermet oder Hartmetall gebildet ist, wobei die wenigstens eine geometrisch definierte Schneide (23) des zweiten Bearbeitungsbereichs (7) in polykristallinem Diamant gebildet ist.

8. Werkzeug (1) nach einem der vorhergehenden Ansprüche, **dadurch gekennzeichnet, dass** der erste Bearbeitungsbereich (5) in Vorschubrichtung des Werkzeugs (1) gesehen dem zweiten Bearbeitungsbereich (7) voreilt.

9. Werkzeug (1) nach einem der vorhergehenden Ansprüche, **dadurch gekennzeichnet, dass** das Werkzeug (1) einen zylindrischen Grundkörper (27) aufweist, von dem zumindest in dem zweiten Bearbeitungsbereich (7) wenigstens eine Rippe (29) abragt, an der die wenigstens eine geometrisch definierte Schneide (23) des zweiten Bearbeitungsbereichs (7) angeordnet ist.

10. Werkzeug (1) nach einem der vorhergehenden Ansprüche, **gekennzeichnet durch** eine Schnittstelle (33) zum Einspannen des Werkzeugs (1) in eine Maschinenspindel.

11. Werkzeug (1) nach einem der vorhergehenden Ansprüche, **dadurch gekennzeichnet, dass** das Werkzeug (1) als Feinbohrwerkzeug ausgebildet ist.

12. Werkzeug (1) nach einem der vorhergehenden Ansprüche, **dadurch gekennzeichnet, dass** das Werkzeug (1) eingerichtet ist zum Bearbeiten eines Motorgehäuses, insbesondere eines Statorgehäuses mit einer Aufnahmebohrung für einen Stator und einer Lagerbohrung für einen Rotor, oder zum Bearbeiten eines Getriebegehäuses.

## Claims

1. Tool (1) for machining a workpiece (3), having
- a longitudinal axis (L), wherein
- the tool (1) has a first machining region (5) and a second machining region (7), wherein
- the first machining region (5) is spaced along the longitudinal axis (L) apart from the second machining region (7),
**characterised in that**
- a chip protection barrier (9) is arranged between the first machining region (5) and the second machining region (7), which is adapted to prevent chips removed from a workpiece (3) from passing from one machining region (5, 7), selected from the first machining region (5) and the second machining region (7), into the other machining region (7, 5), selected from the second machining region (7) and the first machining region (5).

2. Tool (1) according to claim 1, **characterised in that** the first machining region (5) is adapted for machining a first, harder material, wherein the second machining region (7) is adapted for machining a second, softer material.

3. Tool (1) according to one of the preceding claims, **characterised in that** the chip protection barrier (9) is configured as a chip protection plate (11).

4. Tool (1) according to one of the preceding claims, **characterised in that** the chip protection barrier (9) is configured as a chip protection hollow cone (13) which opens towards the first machining region (5).

5. Tool (1) according to one of the preceding claims, **characterised in that** the first machining region (5) has a first machining diameter, wherein the second machining region (7) has a second machining diameter, and wherein the first machining diameter is smaller than the second machining diameter.

6. Tool (1) according to one of the preceding claims, **characterised in that** the first machining region (5) and the second machining region (7) each have at least one geometrically defined cutting edge (23).

7. Tool (1) according to one of the preceding claims, **characterised in that** the at least one geometrically defined cutting edge (23) of the first machining region (5) is formed from cermet or hard metal, wherein the at least one geometrically defined cutting edge (23) of the second machining region (7) is formed from polycrystalline diamond.

8. Tool (1) according to one of the preceding claims, **characterised in that** the first machining region (5), as seen in the feed direction of the tool (1), leads the second machining region (7).

9. Tool (1) according to one of the preceding claims, **characterised in that** the tool (1) has a cylindrical base body (27) from which at least one rib (29) projects at least in the second machining region (7), on which rib (29) the at least one geometrically defined cutting edge (23) of the second machining region (7) is arranged.

10. Tool (1) according to one of the preceding claims, **characterised by** an interface (33) for clamping the tool (1) in a machine spindle.

11. Tool (1) according to one of the preceding claims, **characterised in that** the tool (1) is configured as a fine boring tool.

12. Tool (1) according to one of the preceding claims, **characterised in that** the tool (1) is adapted for machining a motor housing, in particular a stator housing with a receiving bore for a stator and a bearing bore for a rotor, or for machining a gearbox housing.

## Revendications

1. Outil (1) pour l'usinage par enlèvement de copeaux d'une pièce à usiner (3), avec
- un axe longitudinal (L), dans lequel
- l'outil (1) comprend une première zone d'usinage (5) et une deuxième zone d'usinage (7), dans lequel
- la première zone d'usinage (5) est espacée de la deuxième zone d'usinage (7) le long de l'axe longitudinal (L),
**caractérisé en ce que**
- entre la première zone d'usinage (5) et la deuxième zone d'usinage (7) est disposée une barrière de protection contre les copeaux (9), qui est conçue pour empêcher que des copeaux enlevés d'une pièce à usiner (3) ne soient évacués d'une zone d'usinage (5, 7), sélectionnée parmi la première zone d'usinage (5) et la deuxième zone d'usinage (7), dans l'autre zone d'usinage (7, 5) choisie parmi la deuxième zone d'usinage (7) et la première zone d'usinage (5).

2. Outil (1) selon la revendication 1, **caractérisé en ce que** la première zone d'usinage (5) est conçue pour usiner un premier matériau plus dur, dans lequel la deuxième zone d'usinage (7) est conçue pour usiner un deuxième matériau plus mou.

3. Outil (1) selon l'une des revendications précédentes, **caractérisé en ce que** la barrière de protection contre les copeaux (9) est conçue comme une tôle de protection contre les copeaux (11).

4. Outil (1) selon l'une des revendications précédentes, **caractérisé en ce que** la barrière de protection contre les copeaux (9) est conçue comme un cône creux de protection contre les copeaux (13) qui s'ouvre vers la première zone d'usinage (5).

5. Outil (1) selon l'une des revendications précédentes, **caractérisé en ce que** la première zone d'usinage (5) présente un premier diamètre d'usinage, la deuxième zone d'usinage (7) présente un deuxième diamètre d'usinage, et le premier diamètre d'usinage est plus petit que le deuxième diamètre d'usinage.

6. Outil (1) selon l'une des revendications précédentes, **caractérisé en ce que** la première zone d'usinage (5) et la deuxième zone d'usinage (7) présentent chacune au moins un tranchant (23) géométriquement défini.

7. Outil (1) selon l'une des revendications précédentes, **caractérisé en ce que** l'au moins un tranchant (23) géométriquement défini de la première zone d'usinage (5) est formé en cermet ou en métal dur, ledit au moins un tranchant (23) géométriquement défini de la deuxième zone d'usinage (7) étant formé en diamant polycristallin.

8. Outil (1) selon l'une des revendications précédentes, **caractérisé en ce que** la première zone d'usinage (5), vue dans la direction d'avance de l'outil (1), est en avance sur la deuxième zone d'usinage (7).

9. Outil (1) selon l'une des revendications précédentes, **caractérisé en ce que** l'outil (1) présente un corps de base cylindrique (27) à partir duquel fait saillie, au moins dans la deuxième zone d'usinage (7), au moins une nervure (29) sur laquelle est disposé l'au moins un tranchant (23) géométriquement défini de la deuxième zone d'usinage (7).

10. Outil (1) selon l'une des revendications précédentes, **caractérisé par** une interface (33) pour le serrage de l'outil (1) dans une broche de machine.

11. Outil (1) selon l'une des revendications précédentes, **caractérisé en ce que** l'outil (1) est conçu comme un outil d'alésage fin.

12. Outil (1) selon l'une des revendications précédentes, **caractérisé en ce que** l'outil (1) est conçu pour usiner un carter de moteur, en particulier un carter de stator avec un alésage de réception pour un stator et un alésage de palier pour un rotor, ou pour usiner un carter de transmission.
